# EUROPÄISCHE PATENTSCHRIFT

(11) **EP 1 869 752 B1**
(45) Veröffentlichungstag und Bekanntmachung des Hinweises auf die Patenterteilung: **29.06.2011**
(21) Anmeldenummer: 06725663.6
(22) Anmeldetag: 07.04.2006
(51) Int. Cl.: H02K 15/12, B05D 1/04

(54) **BESCHICHTUNGSVERFAHREN FÜR EINEN WICKELKOPF EINER ELEKTRISCHEN MASCHINE**
COATING METHOD FOR AN END WINDING OF AN ELECTRIC MOTOR
PROCEDE DE REVETEMENT D'UNE TETE D'ENROULEMENT D'UN MOTEUR ELECTRIQUE

(30) Priorität: 13.04.2005 DE 102005017111
(43) Veröffentlichungstag der Anmeldung: 26.12.2007
(73) Patentinhaber: SIEMENS AKTIENGESELLSCHAFT, 80333 München (DE)
(72) Erfinder: KAUFHOLD, Martin, 90419 Nürnberg (DE); KLAUSSNER, Bernhard, 90408 Nürnberg (DE)
(86) Internationale Anmeldenummer: PCT/EP2006/061461
(87) Internationale Veröffentlichungsnummer: WO 2006/108817

(56) Entgegenhaltungen:
- WO-A-97/07585
- US-A- 4 343 828
- US-A- 5 316 801
- US-A1- 2003 113 441

## Beschreibung

Die Erfindung betrifft ein Beschichtungsverfahren für einen Wickelkopf einer elektrischen Maschine, wobei der Wickelkopf mehrere zu beschichtende Leiteranordnungen umfasst.

Am Wickelkopf einer beispielsweise als elektrodynamischer Motor oder Generator ausgeführten elektrischen Maschine sind Beschichtungen in verschiedener Art und zu unterschiedlichen Zwecken vorgesehen. Sie dienen z.B. zur elektrischen Isolation, zum mechanischen Schutz oder zum chemischen Schutz und werden mittels mehrfacher Imprägnierung mit Tränkharzen und Tränklacken oder mittels eines Vergusses mit anorganisch gefüllten Tränkharzen (= Gießharz) hergestellt. Dabei kommen beispielsweise Tauchverfahren oder Airless-Spritzverfahren zum Einsatz. Aufgrund der teilweise komplizierten Geometrie des Wickelkopfes weist eine mit einem dieser bekannten Wickelkopfbeschichtungsverfahren hergestellte Schicht keine durchgängig einheitliche Schichtdicke auf. Insbesondere im Bereich von Kanten, Spitzen, Zwickeln, Hinterschneidungen oder Abschattungen resultieren oftmals nur geringere Schichtdicken.

Aus der US 2003/0113441 A1 ist ein Beschichtungsverfahren für die Leiter einer elektrischen Maschine bekannt, bei der das aufzubringende Schichtmaterial mittels einer Sprüheinrichtung zerstäubt wird und zwischen Sprüheinrichtung und den zu beschichtenden Leiteranordnungen eine elektrostatische Potentialdifferenz angelegt wird.

Die Aufgabe der Erfindung besteht deshalb darin, ein Beschichtungsverfahren gemäß dem Oberbegriff des Anspruchs 1 weiterzubilden derart, dass einheitlichere Schichtdicken der Wickelkopfbeschichtung erzielbar sind.

Diese Aufgabe wird erfindungsgemäß durch das Kennzeichen des Anspruchs 1 gelöst.

Mit dem erfindungsgemäßen Beschichtungsverfahren lassen sich auch bei der komplizierten Wickelkopfgeometrie sehr homogene Schichtdicken erzielen. Dies gilt insbesondere auch für die vorstehend genannten problematischen Bereiche. So liegt gerade an Kanten und Spitzen eine erhöhte Feldliniendichte vor, wodurch verfahrensinhärent eine höhere Transportrate der zerstäubte Partikel des Schichtmaterials resultiert und einer zu geringen Schichtdickenausbildung quasi automatisch entgegengewirkt wird. Auch abgeschattete oder hinterschnittene Bereiche werden von den elektrischen Feldlinien erfasst, so dass selbst dort eine ausreichende Schichtdicke erreicht wird. Es verbleiben auch in diesen kritischen Zonen des Wickelkopfes keine unbeschichteten und damit ungeschützten Stellen. Außerdem werden große Schichtdickenunterschiede wie bei den bekannten Verfahren verhindert.

Insbesondere beim Aufbringen eines elektrisch isolierenden Schichtmaterials kommt es mit fortschreitender Beschichtung zu einer Art Selbstregulierung. Mit zunehmender Dicke des aufgebrachten Materials stellt sich ein immer größer werdendes elektrisches Gegenfeld ein, da die Ladungen aufgrund der wachsenden Isolierschicht immer schlechter oder gar nicht mehr abfließen können. Dies ist günstig, da gerade bei der Wickelkopfbeschichtung fast ausschließlich elektrisch isolierende Schichtmaterialien zum Einsatz kommen.

Die Ursache für die Verwendung elektrisch isolierender Schichtmaterialien liegt in den zu beschichtenden elektrisch aktiven Leiteranordnungen, die während des Betriebs der elektrischen Maschine Strom führen und unter Spannung stehen.

Das erfindungsgemäße Beschichtungsverfahren wird also zur Beschichtung elektrisch aktiver Teile eingesetzt.

Weiterhin ist das erfindungsgemäße Beschichtungsverfahren auch aufgrund der feldliniengelenkten und damit sehr zielgenauen Materialzuführung sowie der beschriebenen Selbstregulierung sehr sparsam im Materialverbrauch. Verglichen mit den herkömmlichen Tauchverfahren oder Airless-Spritzverfahren resultiert eine Reduzierung des benötigten Schichtmaterials um etwa 30%.

Vorteilhafte Ausgestaltungen des erfindungsgemäßen Beschichtungsverfahrens ergeben sich aus den Merkmalen der von Anspruch 1 abhängigen Ansprüche.

Ein Blechpaket, das beispielsweise Bestandteil eines Stators oder eines Rotors der elektrischen Maschine ist, wird an ein hohes elektrostatisches Potential angeschlossen. Die Leiteranordnungen sind in Nuten des Blechpakets verlegt, insbesondere elektrisch gegenüber dem Blechpaket isoliert und an zwei Stirnseitenflächen aus dem Blechpaket herausgeführt. Die dort herausgeführten Leiteranordnungen bilden auf jeder Stirnseite einen Wickelkopf. Das insbesondere aus elektrisch leitfähigen Eisenblechen gefertigte Blechpaket lässt sich einfach elektrisch kontaktieren und damit an das hohe elektrische Potential anschließen. Es ergibt sich wieder ein günstiger elektrischer Feldlinienverlauf von der Sprüheinrichtung zu den zu beschichtenden Leiteranordnungen des Wickelkopfes.

Bei einer weiteren Ausgestaltung werden die Leiteranordnungen des Wickelkopfes mit einem Schichtmaterial aus Tränkharz, Isolierlack oder Silikonkautschuk beschichtet. Diese Materialien dienen dem mechanischen oder chemischen Schutz oder dem Schutz vor Feuchtigkeit oder vor Salznebel oder der elektrischen Isolation. Der Silikonkautschuk kann dabei je nach Verwendungszweck auch als ein gelartiges, weitgehend selbstheilendes Polymermaterial ausgebildet sein. Insbesondere handelt es sich um ein Silikongel mit einem sehr guten Haftvermögen und einer besonders hohen Elastizität, dementsprechend mit einem sehr niedrigen Elastizitätsmodul (= Young Modulus).

Vorzugsweise wird außerdem eine Schichtdicke einer auf die Leiteranordnungen des Wickelkopfes aufzubringenden Beschichtung mittels dem Wert der elektrostatischen Potentialdifferenz, also der elektrischen Feldstärke, eingestellt. Somit lassen sich problemlos Schichtdicken zwischen 0,1 mm und 1 mm realisieren, wobei eine Schichtdicke im Bereich von 0,1 mm eher für eine feuchtigkeitsabweisende Beschichtung und eine Schichtdicke im Bereich von 1 mm eher für eine als elektrische Hauptisolierung vorgesehene Beschichtung zum Einsatz kommt.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1: ein Ausführungsbeispiel einer Sprüheinrichtung zur e- lektrostatischen Beschichtung eines aus mehreren Lei- teranordnungen gebildeten Wickelkopfes einer elektri- schen Maschine,
- FIG 2: einen Verlauf der elektrischen Feldlinien zwischen der Sprüheinrichtung gemäß FIG 1 und einer vorstehenden Kante an einem zu beschichtenden Objekt,
- FIG 3: einen Verlauf der elektrischen Feldlinien zwischen der Sprüheinrichtung gemäß FIG 1 und mehreren Leiteranord- nungen gemäß FIG 1 bei einer teilweisen Abschattung,
- FIG 4: ein zwischen zwei Leiteranordnungen gemäß FIG 1 gebil- deter Zwickel und
- FIG 5: ein Querschnitt durch eine beschichtete Leiteranordnung gemäß FIG 1.

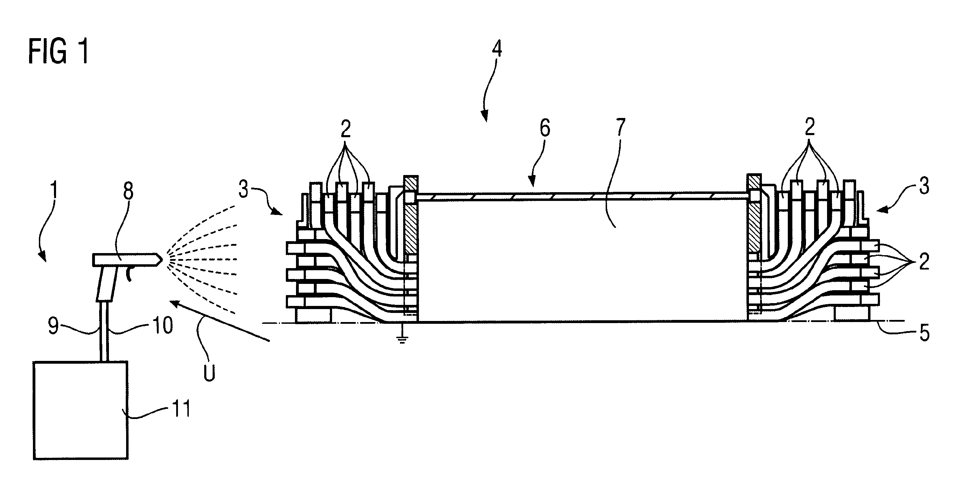

Einander entsprechende Teile sind in den Figuren 1 bis 5 mit denselben Bezugszeichen versehen.

In FIG 1 ist ein Ausführungsbeispiel einer Sprüheinrichtung 1 zur elektrostatischen Beschichtung von zwei aus mehreren Leiteranordnungen 2 gebildeten Wickelköpfen 3 einer im Teilquerschnitt gezeigten elektrischen Maschine 4 dargestellt.

Der Schnitt durch die elektrische Maschine 4 verläuft entlang einer Drehachse 5 durch einen Stator 6 der elektrischen Maschine 4 und zeigt lediglich einen Teil der oberen Hälfte des Stators 6. Ein eigentlich aktiver Bereich 7 mit dem Stator-Eisenblechpaket und den in Nuten geführten elektrischen Spulenleitern ist nicht näher, sondern nur schematisch wiedergegeben. Die Wickelköpfe 3 sind auf beiden axialen Stirnseiten des aktiven Bereichs 7 angeordnet. Sie sind durch eine Vielzahl der in Richtung der Drehachse 5 aus dem Stator-Eisenblechpaket herausgeführten elektrischen Leiteranordnungen 2 gebildet. Die Wickelköpfe 3 und insbesondere die im Bereich der Wickelköpfe 3 verlaufenden Leiteranordnungen 2 werden mittels der Sprüheinrichtung 1 schutzbeschichtet.

Die Sprüheinrichtung 1 umfasst eine Sprühpistole 8, die mittels einer Materialzuleitung 9 und einer elektrischen Zuleitung 10 mit einer Haupteinheit 11 verbunden ist. In der Haupteinheit 11 sind nicht näher gezeigte Komponenten wie ein Materialvorratsbehälter und eine elektrische Hochspannungsquelle untergebracht.

Die Sprüheinrichtung 1 arbeitet nach dem Prinzip des elektrostatischen Spritzverfahrens. Dabei wird zwischen der Ausgangsdüse der Sprühpistole 8 und dem zu beschichtenden Objekt, im Ausführungsbeispiel also den Leiteranordnungen 2 des Wickelkopfes 3, eine hohe elektrische Spannung U angelegt. Das aufzubringende Schichtmaterial wird an der Düse zerstäubt und insbesondere in Richtung der Leiteranordnungen 2 gesprüht oder gespritzt, wobei sich die so zerstäubten, elektrisch geladenen Materialpartikel längs der elektrischen Feldlinien auf die zu beschichtenden Leiteranordnungen 2 zubewegen.

Das eingesetzte elektrostatische Spritzverfahren ermöglicht eine sehr einheitliche Beschichtung der elektrisch aktiven Leiteranordnungen 2 der Wickelköpfe 3. Auch an problematischen Zonen, an denen bei anderen Beschichtungsverfahren nur ein reduzierter oder sogar überhaupt kein Materialauftrag erfolgt, resultiert eine gute Beschichtung.

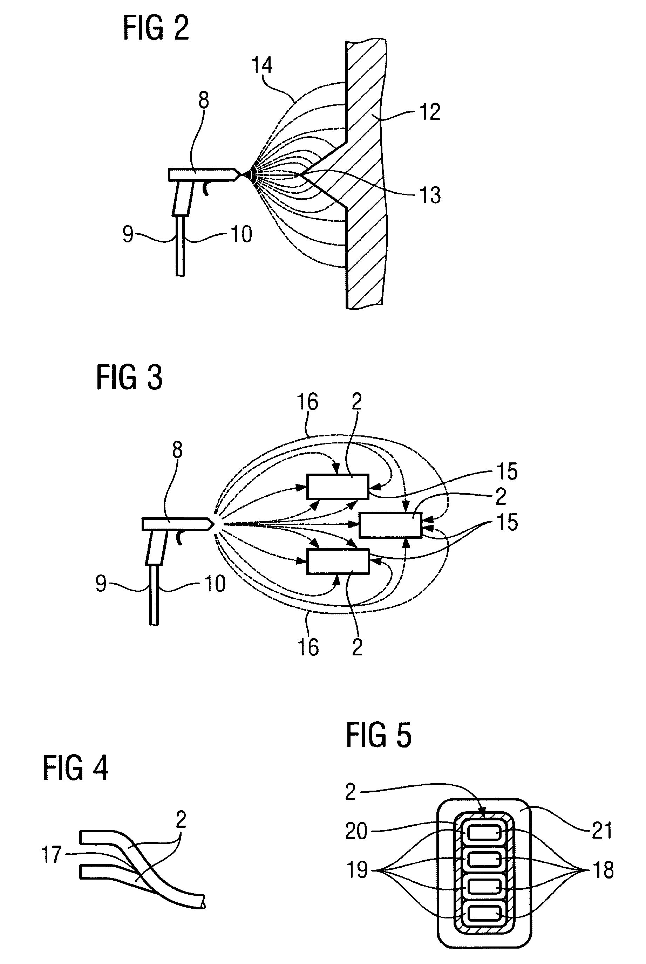

In den Figuren 2 bis 4 sind Beispiele derartig problematischer Zonen dargestellt. In FIG 2 ist ein zu beschichtendes Objekt 12 mit einer vorspringenden Kante 13 gezeigt. Wiedergegeben sind außerdem elektrische Feldlinien 14, die sich zwischen der Ausgangsdüse der Sprühpistole 8 und dem Objekt 12 ausbilden. Im Bereich der Kante 13 ergibt sich eine höhere Feldliniendichte, so dass auch ein höherer Materialtransport zu dieser Stelle stattfindet. Damit wird auch auf die Kante 13 eine ausreichend dicke Beschichtung aufgebracht.

Gemäß der Abbildung von FIG 3 können die Leiteranordnungen 2 so nebeneinander platziert sein, dass Teile der zu beschichtenden Oberflächen gegenüber der Sprühpistole 8 abgeschattet und damit für herkömmliche Beschichtungsverfahren kaum oder gar nicht zugänglich sind. Diese Abschattungen oder Hinterschneidungen sind in FIG 3 mit 15 bezeichnet. Sie werden bei dem elektrostatischen Spritzverfahren auch von elektrischen Feldlinien 16 erfasst und folglich ebenfalls beschichtet.

Gemäß der Abbildung von FIG 4 können zwei benachbarte Leiteranordnungen 2 so geführt sein, dass sie einen für herkömmliche Beschichtungsverfahren ebenfalls schwer zugänglichen Zwickel 17 bilden. Auch diese kritische Stelle lässt sich mittels des elektrostatischen Spritzverfahrens beschichten.

Aus dem in FIG 5 dargestellten Querschnitt durch eine der beschichteten Leiteranordnungen 2 geht hervor, dass sich die für die Spulenwicklungen verwendeten Leiteranordnungen 2 im Ausführungsbeispiel aus mehreren gegeneinander elektrisch isolierten Teilleitern 18 zusammensetzen. Die Teilleiter 18 bestehen aus Kupferstäben. Jeder Teilleiter 18 ist von einer Teilleiterisolierung 19 aus einer Kapton-Folie umgeben.

Die mittels des elektrostatischen Spritzverfahrens hergestellte Beschichtung ist im Ausführungsbeispiel zweischichtig. Sie enthält eine innere erste Deckschicht 20 und eine äußere zweite Deckschicht 21. Die direkt auf die Leiteranordnung 2 aufgebrachte erste Deckschicht 20 besteht aus einem Silikongel, die zweite Deckschicht 21 aus einem Gießharz. Grundsätzlich kann anstelle des Gießharzes aber auch ein gummielastischer Silikonkautschuk vorgesehen sein. Dank des zur Herstellung eingesetzten und besonders günstigen elektrostatischen Spritzverfahrens weisen die beiden Deckschichten 20 und 21 jeweils eine praktisch überall einheitliche Schichtdicke auf.

Die beiden Deckschichten 20 und 21 nehmen auch die Funktion der elektrischen Hauptisolierung wahr, so dass auf eine zusätzliche Isolationszwischenschicht verzichtet werden kann. Dadurch vereinfacht sich der Aufbau, und die Fertigungskosten sinken. Die ansonsten vorgesehene Isolationszwischenschicht umfasst eine Bewicklung der Leiteranordnungen 2 mit Glimmerbändern. Diese Bewicklung ist gerade im Bereich der Wickelköpfe 3 aufwändig und lässt sich oft nur per Hand vornehmen. Dagegen kann ein elektrostatisches Spritzverfahren problemlos automatisiert durchgeführt werden.

## Patentansprüche

1. Beschichtungsverfahren für einen Wickelkopf (3) einer elektrischen Maschine (4), wobei der Wickelkopf (3) mehrere zu beschichtende Leiteranordnungen (2) umfasst, bei dem
a) das aufzubringende Schichtmaterial mittels einer Sprüheinrichtung (1) zerstäubt wird, und
b) zwischen der Sprüheinrichtung (1) und den zu beschichtenden Leiteranordnungen (2) eine elektrostatische Potentialdifferenz (U) angelegt wird,
c) so dass zerstäubte Partikel des Schichtmaterials längs der sich ausbildenden elektrischen Feldlinien (14; 16) in Richtung der zu beschichtenden Leiteranordnungen (2) des Wickelkopfes (3) transportiert werden, wobei
d) die Leiteranordnungen (2) mittels Nuten in einem Blechpaket der elektrischen Maschine (4) verlegt sind und an zwei Stirnseitenflächen aus dem Blechpaket herausgeführt sind, um dort den Wickelkopf (3) zu bilden,
**dadurch gekennzeichnet, dass** um die elektrostatische Potentialdifferenz (U) zwischen Sprüheinrichtung und den zu beschichtenden Leiteranordnungen (2) anzulegen, das Blechpaket an ein hohes elektrostatisches Potential angeschlossen wird.

2. Beschichtungsverfahren nach Anspruch 1, **dadurch gekennzeichnet, dass** die Leiteranordnungen des Wickelkopfes (3) mit einem Schichtmaterial aus Tränkharz, Isolierlack oder Silikonkautschuk beschichtet werden.

3. Beschichtungsverfahren nach einem der vorhergehenden Ansprüche, **dadurch gekennzeichnet, dass** eine Schichtdicke einer auf die Leiteranordnungen (2) des Wickelkopfes (3) aufzubringenden Beschichtung (20, 21) mittels dem Wert der elektrostatischen Potentialdifferenz (U) eingestellt wird.

## Claims

1. Coating method for an end winding (3) of an electric machine (4), wherein the end winding (3) comprises several conductor arrangements (2) to be coated, in which
a) the layer material to be applied is atomized by means of a spray device (1), and
b) an electrostatic potential difference (U) is applied between the spray device (1) and the conductor arrangements (2) to be coated,
c) such that atomized particles of the layer material are transported along the electric field lines (14; 16), which form in the direction of the conductor arrangements (2) of the end winding (3) to be coated, wherein
d) the conductor arrangements (2) are laid by means of slots in a laminated core of the electric machine (4) and are fed out of the laminated core at two face surfaces in order to form the end winding (3) here **characterized in that** the laminated core is connected to a high electrostatic potential in order to apply the electrostatic potential difference (U) between the spray device and the conductor arrangements (2) to be coated.

2. Coating method according to Claim 1, **characterized in that** the conductor arrangements of the end winding (3) are coated with a layer material made from impregnating resin, insulating varnish or silicone rubber.

3. The coating method according to one of the preceding claims, **characterized in that** a layer thickness of a coating (20, 21) to be applied to the conductor arrangements (2) of the end winding (3) is set by means of the value of the electrostatic potential difference (U).

## Revendications

1. Procédé de revêtement d'une tête ( 3 ) de bobine d'un moteur ( 4 ) électrique, dans lequel la tête ( 3 ) de bobine comprend plusieurs dispositifs ( 2 ) conducteurs à revêtir, dans lequel
a) on pulvérise la matière de revêtement à déposer au moyen d'un dispositif ( 1 ) de pulvérisation, et
b) on applique une différence ( U ) de potentiel de potentiel électrostatique entre le dispositif ( 1 ) de pulvérisation et les dispositifs ( 2 ) conducteurs à revêtir,
c) de manière à transporter des particules pulvérisées de la matière de revêtement, le long des lignes ( 14 ; 16) de champ électrique se formant, dans la direction des dispositifs ( 2 ) conducteurs à revêtir de la tête ( 3 ) de bobine, dans lequel,
d) on pose les dispositifs ( 2 ) conducteurs au moyen d'encoches dans un paquet de tôles du moteur ( 4 ) électrique et on les fait sortir du paquet de tôles sur deux surfaces latérales frontales, pour y former la tête ( 3 ) de bobine,
**caractérisé en ce que**, pour appliquer la différence ( U ) du potentiel électrostatique entre le dispositif de pulvérisation et les dispositifs ( 2 ) conducteurs à revêtir, on raccorde le paquet de tôles à un potentiel électrostatique haut.

2. Procédé de revêtement suivant la revendication 1, **caractérisé en ce que** l'on revêt les dispositifs conducteurs de la tête ( 3 ) de bobine d'une matière de revêtement en résine d'imprégnation, en vernis isolant ou en caoutchouc de silicone.

3. Procédé de revêtement suivant l'une des revendications précédentes, **caractérisé en ce que** l'on règle une épaisseur de couche d'un revêtement ( 20, 21 ) à déposer sur les dispositifs ( 2 ) conducteurs de la tête ( 3 ) de bobine au moyen de la valeur de la différence ( U ) de potentiel électrostatique.
